Europäisches Patentamt

(19) European Patent Office

Office européen des brevets

(11) Publication number: **0 047 940**

**B1**

(12) **EUROPEAN PATENT SPECIFICATION**

(45) Date of publication of patent specification: **19.02.86**

(21) Application number: **81106978.0**

(22) Date of filing: **05.09.81**

(51) Int. Cl.⁴: **B 60 C 27/14,** B 60 C 27/06, B 60 C 27/04

(54) **An anti-skid device for vehicle wheels.**

(30) Priority: **17.09.80 IT 2276880 u**

(43) Date of publication of application:
**24.03.82 Bulletin 82/12**

(45) Publication of the grant of the patent:
**19.02.86 Bulletin 86/08**

(84) Designated Contracting States:
**AT CH DE FR GB LI NL SE**

(56) References cited:
**CH-A- 122 221**
**FR-A-2 421 745**
**US-A-2 640 522**
**US-A-2 770 280**

(73) Proprietor: **Seggio, Gianfranco**
**7, via Tracia**
**Milan (IT)**

(72) Inventor: **Seggio, Gianfranco**
**7, via Tracia**
**Milan (IT)**

(74) Representative: **Marietti, Giuseppe**
**CENTRO DI CONSULENZA IN PROPRIETA'**
**INDUSTRIALE Viale Caldara, 43**
**I-20122 Milano (IT)**

Courier Press, Leamington Spa, England.

## Description

This invention relates to an anti-skid device or skid-chain for vehicle wheels, particularly of the type realized according to former proposals of the same Applicant (see for instance US—A— 4 244 412) and formed by a plurality of U-shaped elements adapted to fit radially on the wheel tire, said U-elements being connected with one another by pairs of spacer levers pivotably connected to the arms of said U-elements, each arm having retaining means which are able to removably retain said U-elements and said levers in a first position.

It is the object of this invention to obtain a better usefulness with reference both to the fastening operation of the device to the wheels and to the mounting operative phase. More particularly, these improvements should allow the skid-chain to assume and maintain a correct position of its elements before and during the mounting operation of the same on the tire, and also when the anti-skid chain is working, allowing moreover a substantially aligned position of the anti-skid chain elements when not in use.

According to the invention, said skid-chain is characterized in that said retaining means retain said U-elements and said levers in a second operative position wherein said U-elements form with said levers an angle corresponding to that formed when the anti-skid chain is in its operative position on the tire.

Accordingly, each U-shaped element is exactly positioned with reference to the tire during the mounting phase and when the device is mounted; wrong positionings of the U-shaped elements and unwanted displacements of the same after the skid-chain has been mounted are completely avoided.

The above and further features of the invention will be now disclosed with reference to an embodiment thereof as shown in the accompanying drawings.

Figure 1 is a partial side view of the anti-skid chain during the mounting operation on a vehicle tire.

Figure 2 is a partial top view, with parts in section, of said anti-skid chain according to the invention.

Figure 3 is a view corresponding to that of figure 2, with the components in a disassembled position.

Figure 4 is a cross-sectional view along the line IV—IV of figure 3, showing one side of one of the levers departing from each U-shaped element.

Figure 5 is a cross-sectional view along the line V—V of figure 3 showing the other side of the levers used in the anti-skid chain according to the invention.

Figure 6 is a partially cross-sectioned view showing the aligned position of the U-element and of the levers.

Figure 7 is a diagrammatical view of the position of the connecting levers and U-element in operative condition.

Figure 8 and 9 are views showing the relative position of the levers, U-element and means limiting the angular movement between the same.

The device is formed by a plurality of U-shaped elements 10, which are shaped as described in the former proposal of the same Applicant; these U-elements 10 have, near the ends of each arm, a pivot 12 on which two similar levers 14 and 16 are pivoted; these levers act as connecting and spacing means between the U-elements. The structure of the U-elements and levers is mainly of the type described above by the same Applicant and their realization is preferably in a plastic material. The device allows automatic mounting of the chain on the tire 18, with hooking of the first and last elements through an elastically extensible means. The central part of each U-element contains a metal reinforcement, for example a steel strip 20 of corrugated shape embedded in the plastics material. The coil cooperates to reduce the wearing of this part and, when the plastics material is removed by wearing, forms a series of teeth which provide a good adhesion on the ground.

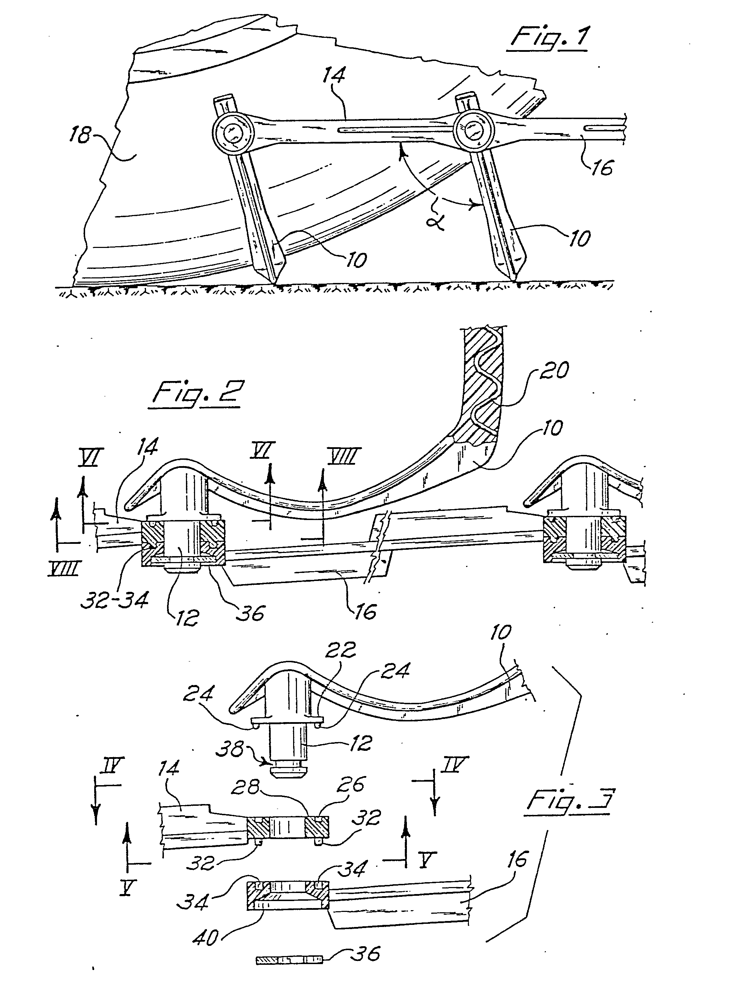

To warrant the maximum efficiency during the mounting process of the anti-skid chain, the U-shaped elements 10 must from an angle a with the levers 14 and 16, as indicated in figure 1, so that said U-elements 10 take the same position they will have once mounted on the tire-wheel 18.

In order to obtain the above position, the pivot 12 of each U-element arm presents, at its base part and preferably on a flange 22, two projections 24 for example diametrically opposite, which are able to snap-fit on corresponding seats or notches 26 shown by an eyelet 28 carried by the lever 14 which is placed upstream, in the wrapping direction of the tire on the skid-chain with reference to the considered U-element. In other words, the tire reaches the lever 14, during the wrapping process, before the U-element 10 and lever 16.

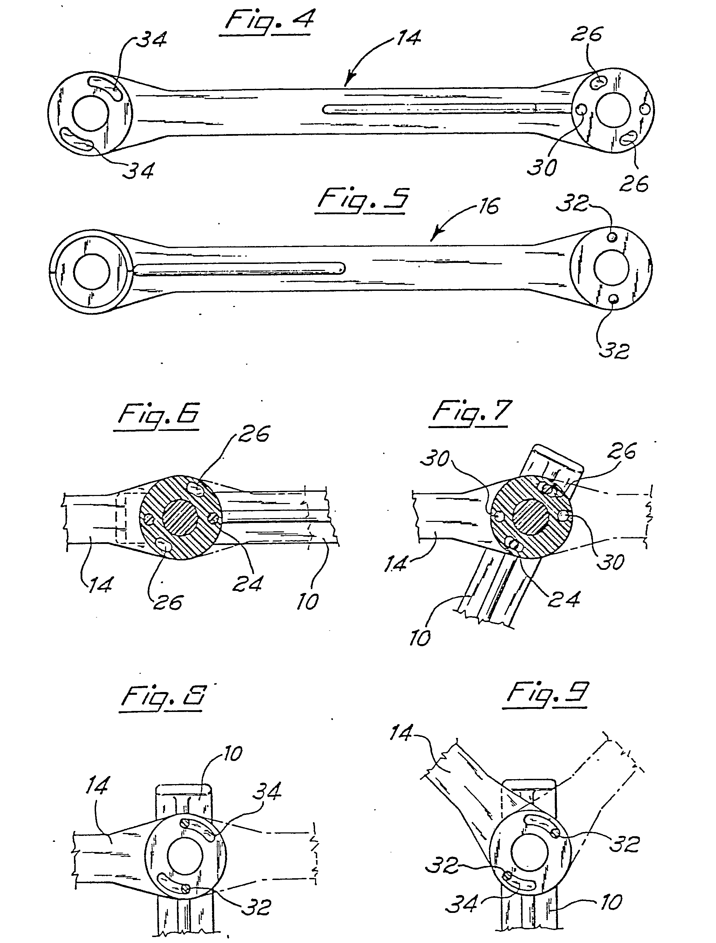

With reference to figure 7, the notches 26 are slightly elongated in order to create a little clearance allowing the adjustment of the angle between the U-element 10 and lever 14 with different tire diameters. The two projections 24 of U-element 10 can also snap-fit, without clearance, in other notches or seats 30 (figure 7) which define a substantially coplanar position of the levers 14 and of U-elements 10 for an aligned disposition of all the parts of the device when the same is not used, in order to reduce the occupied space.

The two levers 14 and 16 are connected with each other, at pivot 12, through means that reduce their possibility of relative angular movement; i.e. the relative rotation angle between the levers. These means are formed by two projections 32 for example on the lever 14 and by corresponding extended slots 34 in the lever 16. The connection between these projections 32 and these extended slots 34 limits the relative positions of levers 14 and 16 to those which lie between a position of substantial alignment (figure 8) and an angular position, as shown in figure 9, preventing the two levers from orientating themselves in the other direction, forming also an angle with the U-element 10. In this way inherent resistance to the stresses to which the elements 10 are subjected, in particular due to obstacles on the ground, is achieved. Finally, the two levers 14 and 16 are fastened to the pivot 12 by means of an elastic snap washer 36 which is inserted in a groove 38 of pivot 12, said elastic washer 36 being preferably made of a plastics material and inserted in a seat 40 at the external eyelet 28 of lever 16. This seat 40 can have the same diameter as the external diameter of the snap washer 36, so that said snap washer cannot be removed once the mounting has been effected.

## Claims

1. An anti-skid chain for vehicle wheels comprising a plurality of U-shaped elements being connected with one another by pairs of spacer levers (14, 16) pivotably connected to the arms of said U-elements, each arm of the U-elements having retaining means (24, 26, 30) which are able to removably retain said U-elements (10) and said levers in a first position, characterized in that said first position is a rest position in which said U-elements and said levers are aligned and in that said retaining means retain said U-elements and said levers in a second operative position wherein said U-elements form with said levers an angle corresponding to that formed when the anti-skid chain is in its operative position on the tire.

2. An anti-skid chain according to claim 1, characterized in that said retaining means, when in the second operative position, have a clearance allowing the adjustments of the angle that the U-elements form with the levers, according to the diameter of the wheel tire.

3. An anti-skid chain according to claim 1, characterized in that said retaining means act between each U-element and the two levers which are positioned upstream the same U-element, in the advancing sense of the wheel when mounting on the device.

4. An anti-skid chain according to claim 1, characterized in that the levers pivoted on one U-element comprising means for limiting the relative rotation between the first aligned rest position and the second operative position wherein the U-element is external to the angle between said levers.

5. An anti-skid chain according to claim 4, characterized in that each U-element arm has a connecting pivot for eyelets of the two neighbouring levers; in that said retaining means and limiting means are respectively positioned near said pivot and said lever eyelets; and in that a snap washer locks said pivot and eyelets.

6. An anti-skid chain according to claim 5, characterized in that said snap washer (36) is housed in a seat (40) formed in the external eyelet.

7. An anti-skid chain according to claim 1, characterized in that at least the base part of each U-element has a reinforcement of metallic material embedded in the plastics material forming said U-element.

8. An anti-skid chain according to claim 7, characterized in that said reinforcement is formed by a strip of steel or similar material of corrugated shape embedded in the base of said U-element.

## Revendications

1. Chaîne antidéparante pour roues de vehicles comportant une pluralité d'éléments en U, qui sont reliés entre eux par une couple de leviers-entretoises (14, 16) pivotés aux bras desdits éléments en U, chaque bras des éléments en U ayant des moyens de retenue (24, 26, 30) qui peuvent retenir de manière amovible lesdits éléments en U (10) et lesdits leviers dans une première position, caractérisée en ce que ladite première position est une position de repos dans laquelle lesdits éléments en U et lesdits leviers sont alignés et en ce que les moyens de retenue mantiennent lesdits éléments en U et lesdits leviers dans une deuxième position active dans laquelle les éléments en U forment avec lesdits leviers un angle correspondant à celui qui est formé lorsque la chaîne antidéparante se trouve dans sa position active sur le pneu.

2. Chaîne antidéparante selon la revendication 1, caractérisée en ce que lesdits moyens de retenue, lorsqu'ils se trouvent dans la deuxième position active, ont un jeu permettant les régulations de l'angle que les éléments en U forment avec les leviers selon le diamètre du pneu des roues.

3. Chaîne antidéparante selon la revendication 1, caractérisée en ce que lesdits moyens de retenue agissent entre chaque élément en U et les deux leviers, qui sont positionnés en amont de l'élément en U dans la direction d'advancement de la roue lorsqu'on monte le dispositif.

4. Chaîne antidéparante selon la revendication 1, caractérisée en ce que les leviers pivotés sur l'un des éléments en U comportent des moyens pour limiter le mouvement relatif entre la première position alignée de repos et la deuxième position active dans laquelle l'élément en U se trouve extérieurement à l'angle formé entre les leviers.

5. Chaîne antidéparante selon la revendication 4, caractérisée en ce que le bras de chaque élément en U est pourvu d'un pivot pour des oeillets des deux leviers adjacents; en ce que lesdits moyens de retenue et de limitation sont positionnés respectivement en voisinage du pivot et des oeillets des leviers; et en ce que une rondelle élastique va bloquer le pivot et les oeillets.

6. Chaîne antidéparante selon la revendication 5, caractérisée en ce que ladite rondelle élastique (36) est logée dans un siège (40) formé dans l'oeillet extérieur.

7. Chaîne antidéparante selon la revendication 1, caractérisée en ce que au moins la partie de fond de chaque élément en U comporte un reinforcement en matériel métallique enrobé dans une matière plastique formant ledit élément en U.

8. Chaîne antidéparante selon la revendication 7, caractérisée en ce que ledit reinforcement est formé d'une bande en acier ou matériel analogue de forme ondulée enrobé dans le fond dudit élément en U.

**Patentansprüche**

1. Gleitschutzkette für Fahrzeugräder bestehend aus einer Mehrzahl von U-förmigen Elementen, die über mit den Armen des U-förmigen Elements drehbar verbundene Abstandhebelpaare (14, 16) miteinander verbunden sind, wobei jeder Arm der U-förmigen Elemente Haltemittel (24, 26, 30) besitzt, die in der Lage sind, die U-förmigen Elemente (10) und die Hebel in einer ersten Stellung abnehmbar zu halten, dadurch gekennzeichnet, dass diese erste Stellung eine Ruhestellung ist, in der die U-förmigen Elemente und die Hebel fluchtend sind und dass die Haltemittel die U-förmigen Elemente und die Hebel in einer zweiten wirksamen Stellung halten, in der die U-förmigen Elemente einen Winkel mit den Hebeln bilden, der demjenigen Winkel entspricht, den die Kette in ihrer wirksamen Stellung auf dem Reifen bildet.

2. Gleitschutzkette nach Anspruch 1, dadurch gekennzeichnet, dass die Haltemittel, wenn sie in der zweiten wirksamen Stellung sind, ein Spiel aufweisen, das die Einstellungen des Winkels, den die U-förmigen Elemente mit den Hebeln bilden, in Anpassung an den Radreifendurchmesser, ermöglicht.

3. Gleitschutzkette nach Anspruch 1, dadurch gekennzeichnet, dass die Haltemittel zwischen jedem U-förmigen Element und den zwei Hebeln, die vor diesem U-förmigen Element angeordnet sind, in Richtung der Radbewegung bei Montage der Vorrichtung, wirken.

4. Gleitschutzkette nach Anspruch 1, dadurch gekennzeichnet, dass die mit einem U-förmigen Element drehbar verbundenen Hebel Grenzmittel umfassen, die die Relativbewegung zwischen der ersten fluchtenden Ruhestellung und der zweiten wirksamen Stellung begrenzen, in der das U-förmige Element ausserhalb des zwischen den Hebeln gebildeten Winkels liegt.

5. Gleitschutzkette nach Anspruch 4, dadurch gekennzeichnet, dass jeder Arm der U-förmigen Elemente einen Verbindungszapfen für Löcher der zwei anliegenden Hebel aufweist, dass die Haltemittel und die Grenzmittel in der Nähe des Zapfens bzw. der Hebellöcher angeordnet sind und dass eine Federscheibe den Zapfen und die Löcher blockiert.

6. Gleitschutzkette nach Anspruch 5, dadurch gekennzeichnet, dass die Federscheibe (36) in einen am äusseren Loch angebrachten Sitz (40) gelagert ist.

7. Gleitschutzkette nach Anspruch 1, dadurch gekennzeichnet, dass wenigstens der Bodenteil jedes U-förmigen Elements eine Verstärkung aus Metall aufweist, die in das aus Kunststoff gebildete U-förmige Element eingebettet ist.

8. Gleitschutzkette nach Anspruch 7, dadurch gekennzeichnet, dass die Verstärkung aus einem Streifen aus Stahl oder ähnlichem gewellten Material besteht, der in den Bodenteil des U-förmigen Elements eingebettet ist.

Fig.1

Fig.2

Fig.3

_Fig. 4_

_Fig. 5_

_Fig. 6_

_Fig. 7_

_Fig. 8_

_Fig. 9_